# EUROPÄISCHE PATENTSCHRIFT

(11) **EP 0 924 133 B1**
(45) Veröffentlichungstag und Bekanntmachung des Hinweises auf die Patenterteilung: **31.10.2001**
(21) Anmeldenummer: 98122820.8
(22) Anmeldetag: 01.12.1998
(51) Int. Cl.: B65B 11/04, A01F 15/07, B65B 57/04

(54) **Vorrichtung zum kontinuierlichen und luftdichten Umhüllen von Ballen**
Apparatus for continuously and hermetically wrapping bales
Dispositif d'emballage continu et étanche de balles

(30) Priorität: 15.12.1997 DE 19755605
(43) Veröffentlichungstag der Anmeldung: 23.06.1999
(73) Patentinhaber: Maschinenfabrik Bernard Krone GmbH, 48480 Spelle (DE)
(72) Erfinder: Krone, Bernard, 48480 Spelle (DE); Ahler, Wilhelm, 48703 Stadlohn (DE)

(56) Entgegenhaltungen:
- DE-A- 4 404 225
- US-A- 5 163 264

## Beschreibung

Die Erfindung bezieht sich auf eine Vorrichtung zum kontinuierlichen und luftdichten Umhüllen von Erntegutballen aus Heu, Stroh oder angewelktem Grüngut mit einer dehnbaren und selbstanhaftenden Folie nach dem Oberbegriff des Anspruches 1. Zur Durchführung eines solchen Umhüllungsvorganges ist es erforderlich, den Erntegutballen in eine Drehbewegung um seine horizontale Rotationsachse zu versetzen. Gleichzeitig dazu muß die Vorratsrolle zum Umhüllen des Erntegutballens mit Folie in eine Drehbewegung um eine vertikale Achse um den Erntegutballen geführt werden. Eine derartige Vorrichtung ist aus der DE 44 04 225 A1 bekannt.

In der EP 0 688 287 B1 wird beispielsweise eine hydraulische Umwickelvorrichtung offenbart, bei der eine Folie über ein Paar Streckwalzen, die dem Strecken der Folie dienen, um einen Ballen aus Silage gewickelt wird. Ein Mangel der vorstehend beschriebenen Umwickelvorrichtung besteht darin, daß keinerlei Mittel zur Kontrolle des Umhüllungsvorganges vorgesehen sind. Das bedeutet, daß beispielsweise ein Abriß der Folie oder das Ende einer Vorratsrolle während des Umhüllungsvorgangs nur visuell durch den Fahrer oder Bediener feststellbar ist. Diese Tatsache macht sich insbesondere bei Kombinationsgeräten nachteilig bemerkbar, bei denen die Umwickelvorrichtung unmittelbar hinter einer Rundballenpresse angeordnet ist und somit durch den Fahrer oder Bediener nicht mehr sichtbar ist. Ein Abriß der Folie oder das Ende einer Vorratsrolle wird somit also erst dann festgestellt, wenn ein nicht vollständig umhüllter Erntegutballen bereits auf dem Feld abgelegt ist.

Aus der US 5 163 264 ist eine Vorrichtung zum Umwickeln eines auf einer Palette stehenden Gutstapels mit einer Schrumpffolie beschrieben, bei der ein Folienvorrat mit zugeordneter Umlenkwalze und Andrückwalze an einer in Rotationsbewegung versetzbaren, aufund absenkbaren Drehscheibe befestigt ist, so daß der Folienvorrat den zu umhüllenden Gutstapel umkreisen kann. In Abrollrichtung des Folienvorrates der Umlenkwalze nachgeordnet ist eine Stützrolle vorgesehen, die zudem einen Spiegel trägt. Stützrolle und Spiegel sind an einem Schwenkhebel befestigt, so daß bei einem Abriß der Folie der Spiegel in eine ausgeschwenkte Position gebracht werden kann, in der er in den Einfallsbereich von Lichtstrahlen von übereinander angeordneten Lichtsensoren gebracht werden kann, um insofern einen Lichtstrahl zu reflektieren als Signal für einen Folienabriß. Die Lichtsensoren sind ortsfest auβerhalb der Umhüllungsvorrichtung vorgesehen. Eine solche Vorrichtung läßt sich bei Vorrichtungen zum Umhüllen von Erntegutballen nicht vorsehen, da im rauhen Alltagsbetrieb einer solchen Vorrichtung während der Feldarbeit eine mit einem Reflektionsspiegel arbeitende Signalvorrichtung aufgrund der anfallenden Staub- und Schmutzbeeinträchtigungen schon nach kurzem Einsatz nicht mehr zuverlässig arbeiten kann.

Aufgabe der Erfindung ist es daher, eine Vorrichtung zum kontinuierlichen und luftdichten Umhüllen von landwirtschaftlichen Erntegutballen zu schaffen, bei der mittels einer einfach herstellbaren, konstengünstigen und robusten Vorrichtung eine Erkennung eines Folienabrisses oder des Endes der auf der Vorratsrolle bereitgestellten Folie während des Umhüllungsvorganges zuverlässig ermöglicht wird.

Zur Lösung der gestellten Aufgabe zeichnet sich die Vorrichtung zum kontinuierlichen und luftdichten Umhüllen von Erntegutballen aus Heu, Stroh oder angewelktem Grüngut der eingangs genannten Art durch die im kennzeichnenden Teil des Anspruchs 1 angegegebenen Merkmale aus. Hinsichtlich wesentlicher weiterer Ausgestaltungen der Erfindung wird auf die Ansprüche 2 bis 12 verwiesen.

Bei einer erfindungsgemäßen Vorrichtung zum kontinuierlichen und luftdichten Umhüllen von Erntegutballen aus Heu, Stroh, angewelktem Grüngut oder dgl. landwirtschaftlichen Halm- oder Blattgütern ist in der Bewegungsbahn eines Folienstreifens zwischen einer Vorratsrolle und einem zu umhüllenden Erntegutballen eine Folienstreckvorrichtung vorgesehen, der ein Umlenkelement nachgeordnet ist, das durch eine Umlenkung des Folienstreifens beim Umhüllungsvorgang aus einer Ruhelage in eine vorgespannte Lage überführt werden kann. Dadurch wird ein Signal bereitgestellt, aus dem Informationen zum Betriebszustand während des Umhüllungsvorganges abgeleitet werden können. Das bedeutet, daß ein fehlerfreier Ablauf des Umhüllungsvorganges des Erntegutballens solange gewährleistet ist, wie sich das Umlenkelement in der vorgespannten Lage befindet, bzw. bei einem Folienabriß oder beim Erreichen des Folienendes der auf der Vorratsrolle befindlichen Folie bewegt sich das Umlenkelement aus der vorgespannten Lage zurück in die Ruhelage. Dieses Signal, das vorzugsweise als eine Wegstrecke meßbar ist, kann somit als Anzeichen für das Auftreten eines Fehlers beim Umhüllungsvorgang gewertet werden.

Gemäß einem weiteren Aspekt der Erfindung ist es vorgesehen, das von dem Umlenkelement bereitgestellte Signal einer zuverlässigen und für den rauhen landwirtschaftlichen Einsatz geeigneten Erfassungs- und Umformeinrichtung zu zuführen, in der dieses Signal in eine den Betriebszustand beschreibende und weiterverarbeitbare Information umgesetzt werden kann. Dabei wird bei einer Vorrichtung zum Umhüllen mit einer um den Körper herum geführten Vorratsrolle davon ausgegangen, daß eine berührungsfreie Erfassung und Umformung des von dem Umlenkelement bereitgestellten Signals in eine den Betriebszustand während des Umhüllungsvorganges beschreibende und weiterverarbeitbare Information von einem rotierenden Wickelarm auf eine ortsfeste Rahmenbaugruppe erreichbar ist. Eine vorteilhafte Ausführungsform der Erfindung geht davon aus, daß die Erfassungs- und Umformeinrichtung Erkennungsmittel, welche an der ortsfesten Rahmenbaugruppe angebracht sind, sowie ein dem Wickelarm zugeordnetes, federnd nachgiebiges Tastelement umfaßt. Dabei sind das Tastelement und das/die Erkennungsmittel einander so zugeordnet, daß während einer Umdrehung des Wickelarmes um den Erntegutballen zumindest einmal eine Erfassung und Umformung des von dem Umlenkelement bereitgestellten Signals durchgeführt werden kann. Vorzugsweise ist es vorgesehen, ein als winkelähnlich geformte Lasche ausgebildetes Tastelement in einer einem Tragrohr des Wickelarmes gegenüberliegenden Position anzubringen, die räumlich einen Bereich einer gedanklichen Verlängerung des Befestigungsendes des Tragrohres am Getriebeausgang der Rahmenbaugruppe umfaßt. Bei einem Folienabriß kann so beispielsweise der Wickelarm frühestens nach einer halben Umdrehung und spätestens nach einer anderthalben Umdrehung in einer definierten Ausgangsstellung angehalten werden. Eine einfache Ausführung der Erfindung beinhaltet Konstruktionselemente, vorzugsweise ein Drahtseil, mit dem das als Wegstrecke von dem Umlenkelement bereitgestellte Signal auf rein mechanischem Wege der Erfassungs- und Umformeinrichtung zuführbar ist. Eine störanfällige elektrisch wirkende Einheit, wie beispielsweise eine Stromquelle in einer Ausführung als Batterie, Generator od. dgl. für den Aufbau eines Stromkreises am Wickelarm wird nicht benötigt.

Vorzugsweise erfolgt die berührungsfreie Erfassung und Umformung des von dem Umlenkelement bereitgestellten Signals dadurch, daß bei einem fehlerfreien Ablauf des Umhüllungsvorganges das Tastelement in einem großen Abstand bei der Drehbewegung des Wickelarmes um den Erntegutballen das/die Erkennungsmittel passiert und somit keinen Schaltvorgang an den Erkennungsmitteln auslöst. Bei einem Folienabriß oder beim Erreichen des Folienendes der Vorratsrolle jedoch passiert das Tastelement das/die Erkennungsmittel in einem geringen Abstand, wobei an den Erkennungsmitteln ein Schaltvorgang ausgelöst wird.

In einer vorteilhaften Weiterbildung der Erfindung ist es auch denkbar, das Tastelement als eine kreisrunde, in ihrem Abstand zu den Erkennungsmitteln federnd nachgiebig angebrachte Zählscheibe auszubilden, die an ihrem Umfang beispielsweise mit gleichmäßig verteilt angeordneten Langlöchern versehen ist. Daraus ergibt sich, daß der Wickelarm beispielsweise bei einem Folienabriß immer bereits beim nächsten Durchlauf der definierten Ausgangsstellung angehalten werden kann.

Eine detaillierte Beschreibung des Gegenstandes der Erfindung erfolgt nun anhand eines Ausführungsbeispieles.
In der Zeichnung stellt im einzelnen dar:
- Fig. 1: eine perspektivische teilweise schematische Darstellung einer erfindungsgemäßen Vorrichtung zum kontinuierlichen und luftdichten Umhüllen von Körpern in einer in Fahrtrichtung weisenden Betrachtungsrichtung;
- Fig. 2: eine vergrößerte Darstellung einer Folienstreckvorrichtung in einer Betrachtungsrichtung gemäß Pfeil A in Fig.1;
- Fig. 3: eine vergrößerte Darstellung einer Erfassungs- und Umformeinrichtung in einer Betrachtungsrichtungsrichtung gemäß Pfeil B in Fig. 1 während des Umhüllungsvorganges;
- Fig. 4: eine Darstellung ähnlich Fig. 3 zum Zeitpunkt der Erkennung beispielsweise eines Folienabrisses;

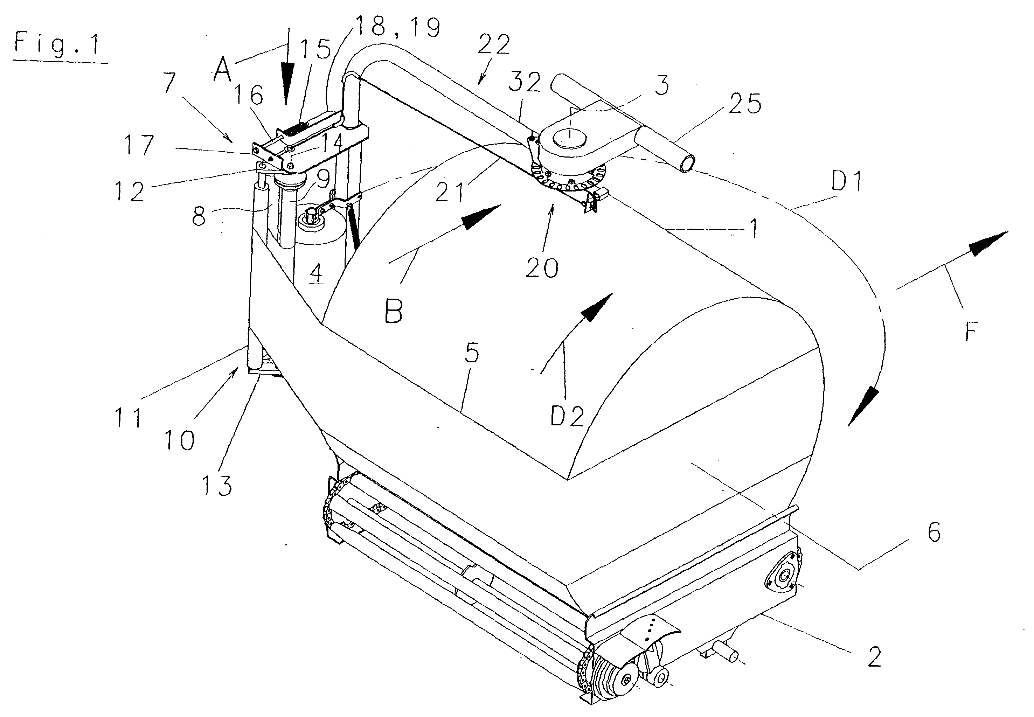

Bei der in Fig. 1 in einer in Fahrtrichtung F weisenden Betrachtungsrichtung dargestellten Vorrichtung zum Umhüllen eines Erntegutballens 1 mit Folie handelt es sich um ein Ausführungsbeispiel mit einem feststehenden Wickeltisch 2 zur Aufnahme eines Erntegutballens 1, um den in einer Drehbewegung mit einer Drehrichtung D1 um eine vertikale Achse 3 während des Umhüllungsvorganges eine Vorratsrolle 4 herum geführt wird, wobei ein Folienstreifen 5 von der Vorratsrolle 4 abgezogen und um den sich um eine horizontale Rotationsachse 6 mit einer Drehrichtung D2 drehenden Erntegutballen 1 gewickelt wird. Die Drehrichtungen D1 und D2 in Fig.1 sind frei gewählt und können ebenso auch entgegengesetzt gerichtet sein.

Wie weiterhin aus der Fig.1 hervorgeht, ist in der Bewegungsbahn des Folienstreifens 5 zwischen der Vorratsrolle 4 und dem Erntegutballen 1 eine Folienstreckvorrichtung 7 angebracht, welche zumindest zwei vertikal angeordnete Streckwalzen 8,9 umfaßt. Die Folienstreckvorrichtung 7 ist dabei mit der Vorratsrolle 4 zu einer Baueinheit zusammengefaßt, wobei sich die Folienstreckvorrichtung 7 und die Vorratsrolle 4 in der Fig.1 in einer definierten Ausgangsstellung für den Umhüllungsvorgang befinden. Das bedeutet, daß in einer derartigen Stellung der Folienstreckvorrichtung 7 und der Vorratsrolle 4 weder eine Aufnahme oder eine Ablage eines Erntegutballens 1 auf bzw. von dem Wickeltisch 2, noch ein Anlegen des Folienstreifens 5 an eine nicht dargestellte Halte- und Schneidvorrichtung behindert wird.

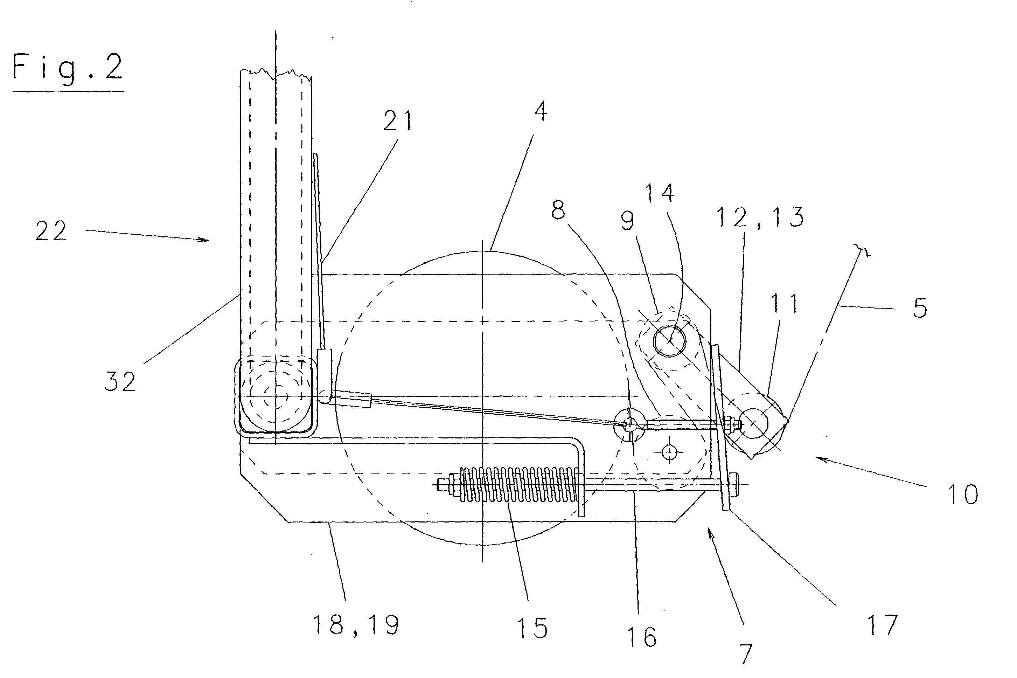

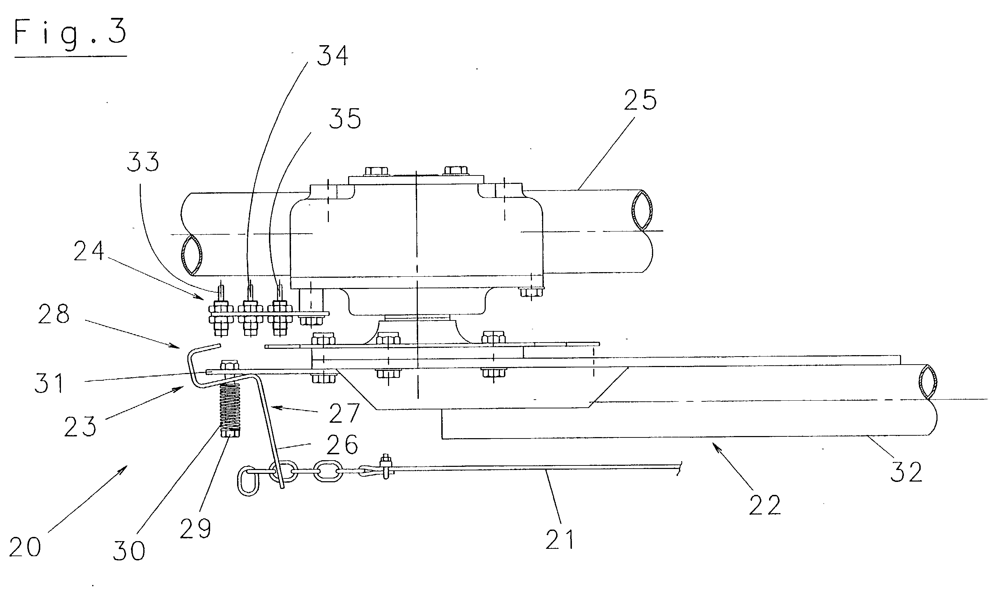

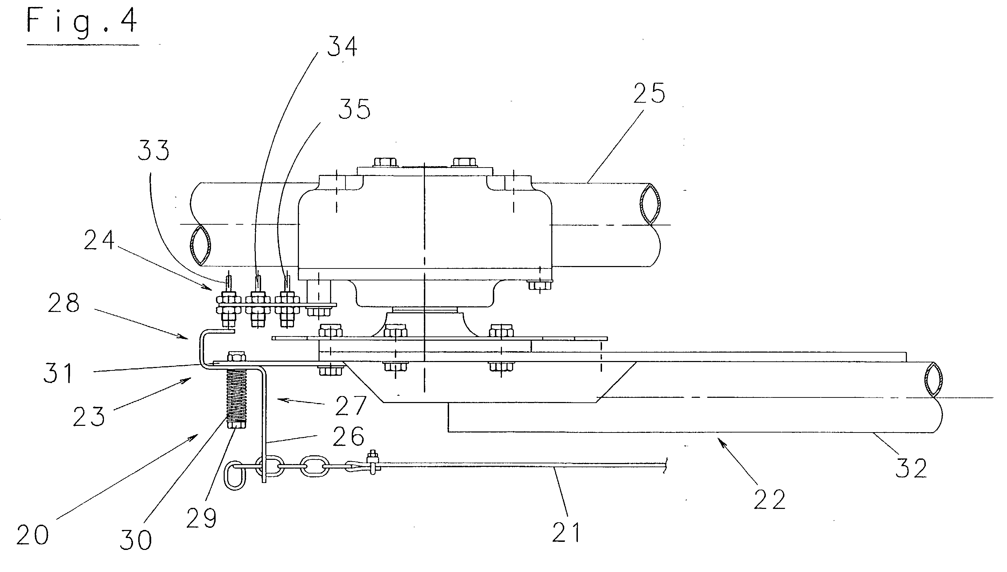

Wie aus den Figuren 1 und 2 zu entnehmen ist, ist der Folienstreckvorrichtung 7 erfindungsgemäß ein Umlenkelement 10 nachgeordnet, das durch die Umlenkung des Folienstreifens 5 federnd nachgiebig aus einer Ruhelage in eine vorgespannte Lage überführbar ist. In einer einfachen konstruktiven Ausbildung handelt es sich bei dem Umlenkelement 10 um eine Umlenkrolle 11, die an ihren Enden in Haltelaschen 12,13 aufgenommen und über diese schwenkbar um eine Rotationsachse 14 der Streckwalze 9 gelagert ist. Vorzugsweise wird dabei von einer Breite der Umlenkrolle 11 ausgegangen, die der Breite des Folienstreifens 5 entspricht. Denkbar ist es allerdings auch, die Umlenkrolle 11 in einer kleineren Breite auszuführen. Zur federnd nachgiebigen Abstützung der Umlenkrolle 11 ist eine Druckfeder 15 vorgesehen, welche über eine Zugstange 16 auf eine an der oberen Haltelasche 12 angebrachten Halterung 17 einwirkt. Die Ruhelage der Umlenkrolle 11 ist dann erreicht, wenn die Halterung 17 an Halteplatten 18,19 der Folienstreckvorrichtung 7 anliegt. Zur Überführung des von dem Umlenkelement 10 bereitgestellten Signals, das in dem beschriebenen Ausführungsbeispiel eine Wegstrecke ist, an eine in Fig. 1 und insbesondere in Fig. 3 und 4 veranschaulichte Erfassungs- und Umformeinrichtung 20 dienen Konstruktionselemente wie beispielsweise ein Drahtseil 21, dessen Länge an unterschiedliche Folienbreiten angepaßt werden kann.

Wie aus den Figuren 3 und 4 hervorgeht, wird die Erfassungs- und Umformeinrichtung 20 im wesentlichen von einem an einem rotierenden Wickelarm 22 angeordneten Tastelement 23 und einem Erkennungsmitteln 24 gebildet, das an einer ortsfesten Rahmenbaugruppe 25 angebracht ist. Als Tastelement 23 ist dabei eine winkelähnlich geformte Lasche 26 vorgesehen, die in ihrem unteren Bereich einen L-förmigen Abschnitt 27 und in ihrem oberen Bereich einen U-förmigen Abschnitt 28 aufweist und mittels einer Schraubverbindung 29 und einer Druckfeder 30, die auch eine Rückstellkraft auf das Umlenkelement 10 ausübt, an einer Haltelasche 31 des Wickelarmes 22 federnd nachgiebig angebracht ist. Dabei sind das Tastelement 23 und das oder die Erkennungsmittel 24 einander so zugeordnet, daß während einer Umdrehung des Wikkelarmes 22 um den Erntegutballen 1 zumindest einmal eine Erfassung und Umformung des von dem Umlenkelement 10 bereitgestellten Signals durchgeführt werden kann. Vorzugsweise ist es vorgesehen, das als winkelähnlich geformte Lasche 26 ausgebildete Tastelement 23 in einer einem Tragrohr 32 des Wickelarmes 22 gegenüberliegenden Position anzubringen, die räumlich einen Bereich einer gedanklichen Verlängerung des Befestigungsendes des Tragrohres 32 am Getriebeausgang der Rahmenbaugruppe 25 umfaßt. Bei einem Folienabriß kann so beispielsweise der Wickelarm 22 mit der Folienstreckvorrichtung 7 und der Vorratsrolle 4 frühestens nach einer halben Umdrehung und spätestens nach einer anderthalben Umdrehung in der definierten Ausgangsstellung (Fig. 1) angehalten werden. Als Erkennungsmittel 24 kann beispielsweise ein elektronischer Sensor 33 verwendet werden, bei dem ein Schaltvorgang ausgelöst wird, wenn wie in Fig. 4 dargestellt, auf mechanischem Wege über das Drahtseil 21 und mit Hilfe der Federkraft der Druckfeder 30 ein Schenkel des U-förmigen Abschnittes 28 bezüglich seines vertikalen Abstands näher an den Sensor 33 herangeführt wird. Dadurch wird eine berührungsfreie Erfassung und Umformung des von dem Umlenkelement 10 bereitgestellten Signals ermöglicht.

In einer vorteilhaften Weiterbildung der Erfindung ist es möglich, wie ebenfalls in Fig. 3 und 4 veranschaulicht, dem Sensor 33 weitere Sensoren 34,35 zuzuordnen, wobei beispielsweise über den Sensor 34 das Erreichen der definierten Ausgangsstellung des Wickelarmes 22 abfragbar und der Sensor 35 für eine Abfrage der Drehzahl des Wickelarmes 22 nutzbar ist. Alle von den Sensoren 33,34,35 gelieferten Informationen können einer Steuerund Regeleinrichtung zugeführt werden.

Obwohl eine bevorzugte Ausführungsform in den Zeichnungen und der dazugehörenden Beschreibung beschrieben wurde, sind weitere Modifikationen und Ausführungen denkbar. So ist es durchaus vorstellbar, das Tastelement 23 als eine kreisrunde, in ihrem Abstand zu den Erkennungsmitteln 24 federnd nachgiebig angebrachte Zählscheibe auszubilden, die an ihrem Umfang beispielsweise mit gleichmäßig verteilt angeordneten Langlöchern versehen ist. Daraus ergibt sich, daß der Wickelarm 22 mit der Folienstreckvorrichtung 7 und der Vorratsrolle 4 beispielsweise bei einem Folienabriß immer bereits beim nächsten Durchlauf der definierten Ausgangsstellung angehalten werden kann.

## Patentansprüche

1. Vorrichtung zum kontinuierlichen und luftdichten Umhüllen von Erntegutballen (1) aus Heu, Stroh oder angewelktem Grüngut mit einer dehnbaren und selbstanhaftenden Folie, wobei der Umhüllungsvorgang ein Abrollen eines Folienstreifens (5) von einer mittels eines um eine vertikale achse (3) rotierend angetriebenen Wickelarmes (22) um den Erntegutballen (1) in einer Drehbewegung um eine vertikale Achse geführten Vorratsrolle (4) sowie ein schraubenlinienförmiges Umhüllen der vollständigen Oberfläche des Erntegutballens (1) einschließt, mit einer zumindest zwei Streckwalzen (8,9) umfassenden und zwischen der Vorratsrolle (4) und dem Erntegutballen (1) angebrachten Folienstreckvorrichtung (7), **dadurch gekennzeichnet, daß** der Folienstreckvorrichtung (7) ein Umlenkelement (10) nachgeordnet ist, welches durch die Umlenkung des Folienstreifens (5) beim Umhüllungsvorgang aus einer Ruhelage in eine vorgespannte Lage überführbar ist, und daß das Umlenkelement (10) bei einer Überführung aus seiner Ruhelage in eine vorgespannte Lage und aus einer vorgespannten Lage in seine Ruhelage über rein mechanisch wirkende Konstruktionselemente (21, 23, 26) ein am Wickelarm (22) angeordnetes Tastelement (23) einer Erfassungs- und Umformeinrichtung (20) zur Umformung bzw. Übertragung eines Signals in seiner Lage verändert und eine berührungsfreie Umformung bzw. Übertragung eines Signals von dem Tastelement (23) auf einen an einer ortsfesten Rahmenbaugruppe (25) vorgesehenen Sensor (24,33) der Erfassungs- und Umformeinrichtung (20) erfolgt, wobei das Tastelement (23) und der Sensor (24, 23) innerhalb der Kreisbewegungsbahn des Wickelarmes (22) angeordnet und diese einander derart zugeordnet sind, daß während einer Umdrehung des Wickelarmes (22) um den Erntegutballen (1) zumindest einmal eine Erfassung und Umformung des von dem Umlenkelement (10) bereitgestellten Signals durchführbar ist, und wobei dem Sensor (24, 33) zumindest ein weiteres Erkennungsmittel (34) zum Abfragen des Erreichens einer definierten Ausgangsstellung des Wickelarmes zugeordnet ist.

2. Vorrichtung nach Anspruch 1, **dadurch gekennzeichnet, daß** der Sensor (24, 33) bei sich in der Ausgangsstellung (Fig. 1) befindlichen Baueinheit aus Folienstreckvorrichtung (7) und Vorratsrolle (4) an der ortsfesten Rahmenbaugruppe (25) in einem Bereich zwischen der vertikalen Achse (3) der Antriebsverbindung des Wickelarmes (22) und der Baueinheit aus Folienstreckvorrichtung (7) und Vorratsrolle (4) befindet.

3. Vorrichtung nach Anspruch 1 oder 2, **dadurch gekennzeichnet, daß** der Sensor (24, 33) und das Tastelement (23) zur vertikalen Achse (3) gegenüberliegend und in der Höhe versetzt angeordnet sind.

4. Vorrichtung nach einem der Ansprüche 1 bis 3, **dadurch gekennzeichnet, daß** das Umlenkelement (10) in der Ruhelage entgegen der Federkraft einer Druckfeder (15 ; 30) nachgiebig abgestützt ist.

5. Vorrichtung nach einem der Ansprüche 1 bis 4, **dadurch gekennzeichnet, daß** das Umlenkelement (10) als eine Umlenkrolle ausgebildet ist, welche um eine vertikale Rotationsachse (14) einer der Streckwalzen (8,9) der Folienstreckvorrichtung (7) schwenkbar gelagert ist.

6. Vorrichtung nach einem der Ansprüche 1 bis 5, **dadurch gekennzeichnet, daß** die Erfassungs- und Umformeinrichtung (20) ein Tastelement (23) aufweist, das federnd nachgiebig am Wickelarm (22) gehaltert ist.

7. Vorrichtung nach einem der Ansprüche 1 bis 6, **dadurch gekennzeichnet, daß** das Tastelement (23) als eine winkelähnlich geformte Lasche (26) ausgeführt ist.

8. Vorrichtung nach Anspruch 7, **dadurch gekennzeichnet, daß** das als Lasche (26) geformte Tastelement (23) im unteren Bereichen einen L-förmigen Abschnitt (27) und im oberen Bereich einen U-förmigen Abschnitt (28) aufweist.

9. Vorrichtung nach Anspruch 7 oder 8, **dadurch gekennzeichnet, daß** das Tastelement mittels einer Schraubverbindung (29) und einer Druckfeder (30) an einer Haltelasche (31) des Wickelarmes (22) federnd nachgiebig befestigt ist.

10. Vorrichtung nach einem der Ansprüche 1 bis 9, **dadurch gekennzeichnet, daß** bei einem einarmig ausgebildeten, mit seinem Tragrohr (32) am Getriebeausgang der Rahmenbaugruppe (25) befestigten und angetriebenen Wickelarm (22) das Tastelement (23) im Bereich einer gedanklichen Verlängerung des Befestigungsendes des Tragrohres (32) gehaltert ist.

11. Vorrichtung nach einem der Ansprüche 1 bis 6, **dadurch gekennzeichnet, daß** das Tastelement (23) als eine kreisrunde Zählscheibe ausgebildet ist, die in ihrem Abstand zu dem Sensor (24, 33) federnd nachgiebig am Wickelarm (22) angeordnet ist.

12. Vorrichtung nach einem der Ansprüche 1 bis 11, **dadurch gekennzeichnet, daß** während einer Umdrehung des Wickelarmes (22) um den Erntegutballen (1) eine Erfassung und Umformung des von dem Umlenkelement (10) bereitgestellten Signals zwei oder mehrmals erfolgt.

## Claims

1. An apparatus for the continuous and airtight wrapping of bales (1) of harvested hay, straw or wilting forage in an extensible and self-clinging film, the wrapping process including unrolling a strip (5) of film from a supply roll (4) guided in a rotary movement about a vertical axis by means of a driven winding arm (22) rotating about a vertical axis (3), the film strip (5) being wound around the bale (1), and also a helical wrapping of the entire surface of the bale (1), with a film stretching means (7) comprising at least two stretching rollers (8, 9) and mounted between the supply roll (4) and the bale (1), **characterised in that** downstream of the film stretching means (7) there is a deflecting element (10) which, by deflecting the film strip (5) during the wrapping process, can be moved out of an inoperative position and into a pretensioned position and **in that**, upon being moved out of its inoperative position into a pretensioned position and out of a pretensioned position into its inoperative position, via purely mechanical acting structural elements (21, 23, 26), a sensing element (23) of a detection and conversion means (20) for converting or transmitting a signal changes its position and a contact-free conversion of transmission of a signal from the sensing element (23) to a sensor (24, 33) of the detection and conversion means (20) provided on a stationary frame assembly (25), whereby the sensing element (23) and the sensor (24, 33) are disposed within the circular movement path of the winding arm (22) and these are so associated with one another that during one rotation of the winding arm (22) about the bale (1) it is possible to carry out at least once a detection and conversion of the signal provided by the deflecting element (10) and whereby at least one further recognition means (34) is associated with the sensor (24, 33) in order to query the attainment of a specific starting position of the winding arm.

2. An apparatus according to claim 1, **characterised in that** when the structural unit comprising film stretching means (7) and supply roll (4) is in the starting position (Fig. 1) on the stationary frame assembly (25), the sensor (24, 33) is in an area between the vertical axis (3) of the drive connection of the winding arm (22) and the structural unit comprising film stretching means (7) and supply roll (4).

3. An apparatus according to claim 1 or 2, **characterised in that** the sensor (24, 33) and the sensing element (23) are opposite each other and are offset in height in relation to the vertical axis (3).

4. An apparatus according to one of claims 1 to 3, **characterised in that**, in the inoperative position, the deflecting element (10) is resiliently braced against the spring force of a thrust spring (15; 30).

5. An apparatus according to one of claims 1 to 4, **characterised in that** the deflecting element (10) is constructed as a deflecting roller which is mounted to pivot about a vertical axis (14) of rotation of one of the stretching rollers (8, 9) of the film stretching means (7).

6. An apparatus according to one of claims 1 to 5, **characterised in that** the detection and conversion means (20) comprises a sensing element (23) which is mounted in springingly resilient manner on the winding arm (22).

7. An apparatus according to one of claims 1 to 6, **characterised in that** the sensing element (23) is constructed as an angularly shaped tongue (26).

8. An apparatus according to claim 7, **characterised in that** the sensing element (23) which is shaped as a tongue (26) has in its bottom portion an L-shaped section (27) and a U-shaped section (28) in its upper part.

9. An apparatus according to claim 7 or 8, **characterised in that** the sensing element is fixed in springingly resilient manner by means of a screwed connection (29) and a thrust spring (30) on a supporting arm (31) of the winding arm (22).

10. An apparatus according to one of claims 1 to 9, **characterised in that** in the case of a driven winding arm (22) which is of one-armed construction and which has its tubular support (32) mounted on the transmission output of the frame assembly (25), the sensing element (23) is supported in the region of an imaginary extension of the fixing end of the tubular support (32).

11. An apparatus according to one of claims 1 to 6, **characterised in that** the sensing element (23) is constructed as a circular indexing disc disposed in springingly resilient manner on the winding arm (22) at a distance from the sensor (24, 33).

12. An apparatus according to one of claims 1 to 11, **characterised in that** during a rotation of the winding arm (22) about the bale (1), a detection and conversion of the signal provided by the deflecting element (10) take place two or more times.

## Revendications

1. Dispositif pour emballer en continu et de manière étanche à l'air, des balles de produit de récolte (1) composées de foin, de paille ou de produit vert, ayant commencé à faner, à l'aide d'un film extensible et autocollant,
selon lequel l'opération d'emballage consiste à dévider autour de la balle (1) une bande de film (5) d'un rouleau d'alimentation (4) guidé suivant un mouvement de rotation autour d'un axe vertical, à l'aide d'un bras enrouleur (22) entraîné en rotation autour d'un axe vertical (3) avec un mouvement d'enveloppe en hélice de toute la surface de la balle (1),
comprenant un dispositif d'étirage de film (7) prévu entre le rouleau d'alimentation (4) et la balle (1), et muni d'au moins deux cylindres d'étirage (8, 9),
**caractérisé en ce que**
le dispositif d'étirage de film (7) est suivi d'un élément de renvoi (10) qui, par le mouvement de renvoi de la bande de film (5) au cours de l'opération d'emballage, peut passer d'une position de repos à une position de précontrainte, et
l'élément de renvoi (10) lors de son passage d'une position de repos dans une position prétendue et à partir de cette position prétendue dans sa position de repos, modifie par un élément de construction (21, 23, 26) à action purement mécanique, la position d'un élément de détection (23) appartenant à une installation de saisie et de transformation (20) pour transformer ou transmettre un signal,
et on a une transformation ou transmission sans contact d'un signal de l'élément de détection (23) vers un capteur (24, 33) de l'installation de saisie et de transformation (20), prévu sur un ensemble-châssis fixe (25),
l'élément de détection (23) et le capteur (24, 33) se trouvant à l'intérieur de la trajectoire circulaire du bras enrouleur (22) en étant associés l'un par rapport à l'autre pour que pendant une rotation du bras enrouleur (22) autour de la balle (1), il y ait au moins une saisie et transformation du signal fourni par l'élément de renvoi (10), et
le capteur (24, 33) est associé à au moins un autre moyen de reconnaissance (34) pour déterminer si le bras enrouleur se retrouve dans une position de départ définie.

2. Dispositif selon la revendication 1,
**caractérisé en ce que**
lorsque l'ensemble formé du dispositif d'étirage de film (7) et du rouleau d'alimentation (4) se trouve dans la position de repos (figure 1) sur l'ensemble-châssis fixe (25), le capteur (24, 33), se trouve situé entre l'axe vertical (3) de la liaison d'entraînement du bras enrouleur (22) et l'ensemble formé par le dispositif d'étirage de film (7) et le rouleau d'alimentation (4).

3. Dispositif selon la revendication 1 ou 2,
**caractérisé en ce que**
le capteur (24, 33) et l'élément de détection (23) sont opposés de part et d'autre de l'axe vertical (3) et sont décalés en hauteur.

4. Dispositif selon l'une quelconque des revendications 1 à 3,
**caractérisé en ce que**
l'élément de renvoi (10) s'appuie de manière souple, en position de repos contre la force développée par un ressort de compression (15 ; 30).

5. Dispositif selon quelconque des revendications 1 à 4,
**caractérisé en ce que**
l'élément de renvoi (10) est en forme d'un rouleau de renvoi monté pivotant autour d'un axe de rotation vertical (14) de l'un des cylindres d'étirage (8, 9) du dispositif d'étirage de film (7).

6. Dispositif selon l'une quelconque des revendications 1 à 5,
**caractérisé en ce que**
l'installation de saisie et de transformation (20) comprend un élément de détection (23) tenu de manière élastique souple sur le bras enrouleur (22).

7. Dispositif selon l'une quelconque des revendications 1 à 6,
**caractérisé en ce que**
l'élément de détection (23) est constitué par une patte (26) de forme coudée.

8. Dispositif selon la revendication 7,
**caractérisé en ce que**
l'élément de détection (23) en forme de patte (26) comporte dans sa zone inférieure, un segment (27) en forme de L et dans sa zone supérieure un segment (28) en forme de U.

9. Dispositif selon les revendications 7 ou 8,
**caractérisé en ce que**
l'élément de détection est fixé à l'aide d'une liaison à vis (29) et d'un ressort de compression (30), de manière élastique souple sur une patte de fixation (31) du bras enrouleur (22).

10. Dispositif selon l'une quelconque des revendications 1 à 9,
**caractérisé en ce que**
dans le cas d'un bras enrouleur (22), à un seul bras, fixé et entraîné par son tube de support (32) sur la sortie de la transmission de l'ensemble-châssis (25), l'élément de détection (23) est maintenu au niveau du prolongement géométrique de l'extrémité de fixation du tube de support (32).

11. Dispositif selon l'une quelconque des revendications 1 à 6,
**caractérisé en ce que**
l'élément de détection (23) est un disque de comptage circulaire installé de manière élastique souple sur le bras enrouleur (22) à la distance appropriée par rapport au capteur (24, 33).

12. Dispositif selon l'une quelconque des revendications 1 à 11,
**caractérisé en ce que**
pendant une rotation du bras enrouleur (22) autour de la balle (1), une saisie et une transformation du signal fourni par l'élément de renvoi (10) est effectuée deux ou plusieurs fois.
